# FASCICULE DE BREVET EUROPEEN

(11) **EP 0 668 122 B1**
(45) Date de publication et mention de la délivrance du brevet: **18.11.1998**
(21) Numéro de dépôt: 95470005.0
(22) Date de dépôt: 16.02.1995
(51) Int. Cl.: B23P 15/24, B21D 51/16, C03B 37/08

(54) **Procédé de fabrication d'un élément d'enceinte de fluide**
Herstellungsverfahren für ein Raumelement eines Fluides
Method of manufacturing a container element for a fluid

(30) Priorité: 22.02.1994 FR 9402149
(43) Date de publication de la demande: 23.08.1995
(73) Titulaire: SEVA, société dite,, F-71100 Chalon-sur-Saône (FR)
(72) Inventeur: Bagard, Jean-Paul, F-71880 Chatenoy le Royal (FR)
(74) Mandataire: Puit, Thierry

(56) Documents cités:
- EP-A- 0 235 897
- WO-A-92/09535
- GB-A- 2 019 286
- US-A- 3 031 717
- US-A- 4 078 413
- US-A- 4 402 767
- US-A- 4 578 362

## Description

La présente invention est relative à la fabrication d'un élément d'enceinte.

Plus particulièrement, l'invention concerne un procédé de fabrication d'un élément d'enceinte destinée à contenir et à permettre l'écoulement d'un fluide à haute température, par exemple des compresseurs, des turbo-compresseurs, des centrifugeurs destinés à la fabrication de fibres minérales notamment de laine de verre ou de roche, ou des turbines aéronautiques ou aérospatiales (voir article "Laser drilling holes at an angle" de la revue "Metalworking Production", rubrique : "Technology show case" septembre 1993).

US-A-4 402 767 dévoile un procédé de fabrication d'un élément d'enceinte destinée à contenir et à permettre l'écoulement d'un fluide à une température supérieure à 850°C, comprenant les étapes suivantes: chauffage d'un flan en alliage métallique réfractaire jusqu'à la température plastique, premier formage du flan par un emboutissage formant la chambre de l'enceinte, deuxième formage formant des rabats internes ou externes par emboutissage de l'extrémité de la chambre, refroidissement de la pièce, et traitement thermique.

Les superalliages (voir FR-A-2 534 167) sont particulièrement avantageux pour réaliser des pièces métalliques devant résister à l'usure et à la corrosion provoquées par l'écoulement d'un liquide à haute température. Les superalliages sont des alliages renforcés par précipitation de particules de carbures ou analogues et sont principalement des alliages à base de nickel, de cobalt, de fer ou de fer-nickel.

Dans la technique classique les pièces sont moulées à la forme voulue car il est extrêmement complexe de former des pièces en de tels alliages. En effet, les superalliages ne peuvent pas se plier à froid, donc il est nécessaire de travailler à la température plastique et ceci de manière constante.

Il n'est pas possible d'utiliser des matériaux élastomères pour la mise en forme des pièces en raison de la température. De plus, les techniques de mise en forme sous pression de gaz posent le problème de complexité des réalisations d'outillage En outre il faut éviter les problèmes d'échauffement locaux dus à l'interface poinçon-pièce-matrice et dus à la déformation de la pièce.

Il faut de plus, qu'après le formage des pièces et traitement éventuel, la structure et la taille des grains de métal soient telles que la pièce présente les caractéristiques mécaniques voulues.

L'invention a pour but de remédier à ces inconvénients. A cet effet, le procédé selon l'invention comprend les étapes suivantes :
- l'enduisage d'un flan en alliage métallique réfractaire par une colle à base d'un matériau minéral tel que du verre,
- dépôt sur le flan d'au moins une pellicule de matériau minéral comme du verre adaptée au matériau et à la température de plasticité du flan,
- chauffage du flan jusqu'à la température plastique,
- premier formage du flan par un emboutissage formant la chambre de l'enceinte,
- deuxième formage formant des rabats internes ou externes par emboutissage de l'extrémité de la chambre,
- refroidissement de la pièce,
- traitement thermique.

Dans ce procédé la pièce a subi un corroyage soit par rétreint, soit par épaississement et, suite au traitement thermique, présente une bonne austénitisation ou une bonne recristallisation reproductibles sur les différentes pièces d'une production en série.

Suivant d'autres caractéristiques :
- le flan est réalisé en un alliage renforcé par dispersion d'oxydes ;
- le flan est réalisé en métal obtenu par métallurgie des poudres, par atomisation des poudres suivie d'un forgeage ;
- le flan est réalisé par fusion de l'alliage puis affinage en particulier sous vide suivi d'un laminage ;
- le flan est grenaillé préalablement à l'enduisage et/ou l'étape de dépôt de pellicule de verre est suivie d'une étape d'étuvage ;
- la colle à base de verre est constituée d'au moins un verre, une céramique, d'un liant et de l'eau.

L'étape consistant en un premier formage est suivie des étapes suivantes :
* refroidissement,
* usinage de la périphérie de la pièce obtenue par formage du flan pour obtenir une extrémité régulière,
* chauffage de la pièce jusqu'à la température plastique,
   après le refroidissement suivant le deuxième formage :
   * troisième formage pour augmenter l'angle du rabat,
   * refroidissement,
   * grenaillage, suivi du traitement thermique,

L'étape de chauffage du flan se fait dans un four. L'outillage est préchauffé pour permettre le thermoformage à la sortie du flan du four.

On fournira maintenant un exemple de mise en oeuvre de l'invention appliquée à la fabrication d'une chambre de turbine aéronautique ou d'un centrifugeur de fabrication de laine de verre.

Dans cet exemple, le flan de départ sera un disque découpé au plasma dans un premier temps, ceci dans une tôle en alliage renforcé par dispersion d'oxydes à matrice superalliage base nickel et à base d'alliage d'aluminium. L'épaisseur du flan de départ sera comprise entre 9 et 9.8 mm.

Pour la détermination du diamètre du flan de départ, on considère que globalement l'épaisseur reste constante au cours du formage. On peut donc écrire que l'aire du flan de départ est égale à l'aire totale de la pièce terminée. Les dimensions sont mesurées à la fibre neutre de la pièce.

Le flan est sablé, suivi d'un enduisage par une colle liquide constituée d'un verre, d'une céramique, d'un liant et d'eau comprenant (en proportions pondérales) :
- - fondant non plombeux: 40 à 76 %
- - oxyde basique: 35 à 45 %
- - oxyde amphotère: 2 à 13 %
- - minéral: 1 à 7 %
- - liquide: 0 à 15 %
- - liant: 3 à 15 %

Ensuite, on dépose une ou plusieurs couches de composant sous forme de mat, de tissé de verre ou de toile céramique pour former un matériau de verre isolant auto-recuit qui forme un revêtement de toute la surface du flan.

Ce revêtement est adapté au matériau du flan et, à sa température de formage, deviendra pâteux.

Ensuite le flan revêtu est étuvé à une température de 80°C pendant un quart d'heure. Puis le flan est stocké.

On chauffe le flan à la température plastique à atmosphère ambiante.

On préchauffe le poinçon de thermoformage à la température de 400°C, on sort le flan du four pour le placer sous l'outillage, puis on réalise la première opération de formage par descente du poinçon au centre du flan, ce qui forme la cavité délimitant la chambre.

La pièce formée est refroidie, puis usinée pour atténuer les plis de la circonférence externe.

La pièce est de nouveau chauffée à la température plastique suivi d'un formage de rabat de l'extrémité ouverte de la pièce vers l'extérieur. La pièce est refroidie, puis grenaillée. Enfin, un traitement thermique de détente libère les contraintes internes de la pièce et recristallise le métal.

Cette invention permet la mise en forme d'alliages métalliques ne provenant pas des techniques de fonderie de façon à répondre à des critères d'utilisation particulièrement sévères.

## Revendications

1. Procédé de fabrication d'un élément d'enceinte destinée à contenir et à permettre l'écoulement d'un fluide à une température supérieure à 850°C comprenant les étapes suivantes :
- enduisage d'un flan en alliage métallique réfractaire par une colle à base d'un matériau minéral notamment du verre,
- dépôt sur le flan d'au moins une pellicule de matériau minéral tel que du verre adapté au matériau et à la température de plasticité du flan,
- chauffage du flan jusqu'à la température plastique,
- premier formage du flan par un emboutissage formant la chambre de l'enceinte,
- deuxième formage formant des rabats internes ou externes par emboutissage de l'extrémité de la chambre,
- refroidissement de la pièce,
- traitement thermique.

2. Procédé suivant la revendication 1, dans lequel le flan est réalisé en un alliage renforcé par dispersion d'oxydes.

3. Procédé suivant la revendication 1, dans lequel le flan est réalisé en métal obtenu par métallurgie des poudres, par atomisation des poudres suivie d'un forgeage.

4. Procédé suivant la revendication 1, dans lequel le flan est réalisé par fusion de l'alliage puis affinage, en particulier sous vide suivi d'un laminage.

5. Procédé suivant l'une des revendications précédentes dans lequel le flan est grenaillé préalablement à l'enduisage et/ou l'étape de dépôt de pellicule de verre est suivie d'une étape d'étuvage.

6. Procédé selon l'une des revendications précédentes dans lequel la colle à base de verre est constituée d'au moins un verre, une céramique, d'un liant et de l'eau.

7. Procédé suivant l'une des revendications précédentes dans lequel l'étape consistant en un premier formage est suivie des étapes suivantes :
- refroidissement,
- usinage de la périphérie de la pièce obtenue par formage du flan pour obtenir une extrémité régulière,
- chauffage de la pièce jusqu'à la température plastique, après refroidissement suivant le deuxième formage,
- troisième formage pour augmenter l'angle du rabat,
- refroidissement,
- grenaillage, suivi du traitement thermique.

8. Procédé selon l'une des revendications précédentes dans lequel l'étape de chauffage du flan se fait dans un four et est suivie d'un préchauffage de l'outillage de thermoformage, d'une sortie du flan du four et d'un grenaillage.

## Claims

1. Process for manufacturing an enclosure element intended to contain, and to allow the flow of, a fluid at a temperature above 850°C, comprising the following steps:
- coating of a blank made of a refractory metal alloy with an adhesive based on a mineral material, such as glass,
- deposition on the blank of at least one film of mineral material, such as glass, which is suited to the material and the plasticity temperature of the blank,
- heating of the blank to the plastic temperature,
- first forming of the blank by stamping which forms the chamber of the enclosure,
- second forming which forms inner or outer folded-over parts by stamping the end of the chamber,
- cooling of the part,
- heat treatment.

2. Process according to Claim 1, in which the blank is made of an alloy strengthened by oxide dispersion.

3. Process according to Claim 1, in which the blank is made of a metal obtained by powder metallurgy, by powder spraying followed by forging.

4. Process according to Claim 1, in which the blank is produced by melting the alloy, then refining, especially in a vacuum, followed by rolling.

5. Process according to one of the preceding claims in which the blank is shot-blasted prior to coating, and/or the glass film-deposition step is followed by a baking step.

6. Process according to one of the preceding claims in which the glass-based adhesive consists of at least a glass, a ceramic, a binder and water.

7. Process according to one of the preceding claims in which the step consisting of first forming is followed by the following steps:
- cooling,
- machining of the periphery of the part obtained by forming the blank, in order to produce an even end,
- heating of the part to the plastic temperature, after cooling, following the second forming,
- third forming to increase the angle of the folded-over part,
- cooling,
- shot-blasting, followed by heat treatment.

8. Process according to one of the preceding claims in which the step involving heating of the blank is carried out in an oven and is followed by a preheating of the thermoforming tool, removal of the blank from the oven and shot-blasting.

## Patentansprüche

1. Verfahren zur Herstellung eines Behälterelements, das das Strömen eines Fluids mit einer Temperatur von über 850 °C aufnehmen und ermöglichen soll, welches folgende Stufen
- Beschichten eines Blechs aus einer feuerfesten Metallegierung mit einem Klebstoff auf der Basis eines insbesondere aus Glas bestehenden anorganischen Materials,
- Aufbringen mindestens einer Schicht aus einem anorganischen Material wie Glas, das an das Material und die Fließtemperatur des Blechs angepaßt ist, auf das Blech,
- Erhitzen des Blechs auf Fließtemperatur,
- erste Umformung des Blechs mittels Tiefziehen, durch welches die Behälterkammer gebildet wird,
- zweite Umformung, mittels welcher Innen- oder Außenbiegungen durch Tiefziehen des Kammerendes gebildet werden,
- Abkühlen des Werkstücks und
- Wärmebehandlung
umfaßt.

2. Verfahren nach Anspruch 1, in welchem das Blech aus einer durch dispergierte Oxide verfestigten Legierung hergestellt ist.

3. Verfahren nach Anspruch 1, in welchem das Blech aus einem Metall hergestellt ist, das durch Pulvermetallurgie, durch Versprühen von Pulvern mit anschließendem Pulverschmieden, erhalten worden ist.

4. Verfahren nach Anspruch 1, in welchem das Blech durch Schmelzen der Legierung mit anschließender Feinung, insbesondere unter Vakuum, gefolgt von einem Walzvorgang, hergestellt ist.

5. Verfahren nach einem der vorhergehenden Ansprüche, worin das Blech vor dem Beschichten kugelgestrahlt wird und/oder der Stufe des Aufbringens der Glasschicht eine Ofentrocknungsstufe folgt.

6. Verfahren nach einem der vorhergehenden Ansprüche, worin der Klebstoff auf Glasbasis aus mindestens einem Glas, einem keramischen Stoff, einem Bindemittel und Wasser besteht.

7. Verfahren nach einem der vorhergehenden Ansprüche, worin sich an die aus einer ersten Umformung bestehenden Stufe folgende Stufen anschließen:
- Abkühlung,
- maschinelle Bearbeitung des Randes des durch Umformung des Blechs erhaltenen Werkstücks, um ein gleichmäßiges Ende zu erhalten,
- Erhitzen des Werkstücks auf Fließtemperatur, wonach auf die zweite Umformung eine Abkühlung folgt,
- dritte Umformung, um den Biegewinkel zu vergrößern,
- Abkühlung und
- Kugelstrahlen mit anschließender Wärmebehandlung.

8. Verfahren nach einem der vorhergehenden Ansprüche, in welchem die Stufe des Erhitzens des Blechs in einem Ofen erfolgt, woran sich die Vorerwärmung des Warmumformwerkzeugs, das Kommen des Blechs aus dem Ofen und ein Kugelstrahlen anschließt.
